Europäisches Patentamt

European Patent Office

Office européen des brevets

(11) Veröffentlichungsnummer: **0 267 468**
**A2**

(12) **EUROPÄISCHE PATENTANMELDUNG**

(21) Anmeldenummer: 87115394.6

(51) Int. Cl.4: **H04Q 9/14** , H04L 11/16

(22) Anmeldetag: 21.10.87

(30) Priorität: 10.11.86 DD 296101
10.11.86 DD 296102

(43) Veröffentlichungstag der Anmeldung:
18.05.88 Patentblatt 88/20

(84) Benannte Vertragsstaaten:
AT BE CH DE FR GB IT LI NL

(71) Anmelder: **VEB Geräte- und Regler-Werk Leipzig**
**Baalsdorfer Strasse 55**
**DDR-7027 Leipzig(DD)**

(72) Erfinder: **Gibas, Peter, Dr.**
**Schirmerstrasse 1**
**DDR-7050 Leipzig(DD)**
Erfinder: **Hofmann, Dieter**
**Brandiser Strasse 2**
**DDR-7050 Leipzig(DD)**
Erfinder: **Kriesel, Werner, Prof.Dr.sc.phil.**
**Rödelstrasse 5**
**DDR-7031 Leipzig(DD)**
Erfinder: **Helm, Peter**
**Chistoph-Probst-Strasse 5**
**DDR-7026 Leipzig(DD)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **Verfahren und Schaltungsanordnung zur Informationsübertragung zwischen einer zentralen Steuereinrichtung und peripheren Funktionseinheiten.**

(57) Gemäß der Erfindung bestehen die peripheren Funktionseinheiten (6) aus kombinierten binren Geber-und Stelleinrichtungen, und die Informationsübertragung wird von der zentralen Steuereinrichtung (1) durch Ausssendung eines aus einem Adreß-und einem Datenteil bestehenden Datenwortes ausgelöst.

Um hohe Taktraten für die Erfassung und Ausgabe auch bei Ausfall der Adressende odierung einer peripheren Funktionseinheit zu garantieren, wobei wahlweise Zugriff auf beliebige periphere Funktionseinheiten zu ermöglichen ist und Wechselwirkungen zwischen Adresse und Ort des Anschlusses der peripheren Funktioneinheiten am Übertragungskanal auszuschließen sind, werden die parallelen Datenworte, nachdem sie in einer Einrichtung zur Parallel-Seriell-Wandlung (3) ungetaktet in serielle Datenworte umgewandelt worden sind, auf einem ersten Übertragungskanal (5) an die peripheren Funktionseinheiten (6; 6' usw)gesendet. In diesen wird das serielle Datenwort sowohl weitergeleitet als auch analysiert. Bei Adressenerkennung wird die im seriellen Datenwort enthaltene Information aufgabengemäß verarbeitet und im Antwortsignal an die zentrale Steuereinrichtung (1) gesendet.

Figur 1

1a

# 0 267 468

## Verfahren und Schaltungsanordnung zur Informationsübertragung zwischen einer zentralen Steuereinrichtung und peripheren Funktionseinheiten

Die Erfindung betrifft ein Verfahren und eine Schaltungsanordnung zur Informationsübertragung zwischen einer zentralen Steuereinrichtung und peripheren Funktionseinheiten, die kombinierte binäre Geber- und Stelleinrichtungen sein können, wobei die Informationsübertragung von der zentralen Steuereinrichtung durch die Aussendung eines Datenwortes, bestehend aus einem Adreß-und einem Datenteil, ausgelöst wird.

Für die Übertragung von Informationen zwischen einer zentralen Steuereinrichtung und peripheren Funktionseinheiten ist es bekannt, Datenübertragungsverfahren anzuwenden, die auf direkten sternförmigen Übertragungsstrukturen beruhen. Die Realisierung solcher Übertragungsstrukturen, die vorwiegend als Zweidrahtleitungen ausgelegt sind, erfordern insbesondere bei Systemen mit einer großen Anzahl peripherer Funktionseinheiten oder bei großen zu überbrückenden Entfernungen einen erheblichen Leitungsbedarf und sind damit ökonomisch ungünstige Lösungen.

Eine wesentlich einfachere Lösung zum sequentiellen, adressenlosen Anschluß mehrerer peripherer Funktionseinheiten an eine zentrale Steuereinrichtung ist aus DE-A1 3 008 450 bekannt. Hier werden Teilnehmer, die als Sender oder Empfänger realisiert werden können, sequentiell, entsprechend ihrer Reihenfolge, am Bus über eine Zweidrahtleitung durch zwei zentral oder dezentral gesteuerte Schalter in den Teilnehmern mit der zentralen Steuereinrichtung verbunden. Wesentlicher Nachteil dieser Lösung ist jedoch, daß der Ausfall eines Teilnehmers vom System nicht toleriert wird, und es bei Ausfall des der Zentrale am nächsten liegenden Teilnehmers zum Ausfall des gesamten Systems kommt. Eine andere effektive Lösung zur asynchronen Abfrage bzw. Bestätigung von einfachen peripheren Funktionseinheiten stellt das in DD-A 229 001 beschriebene Verfahren dar. Hier wird von einer zentralen Steuereinheit ein Datenwort auf eine Ringleitung gesendet, das einen Adreß-und einen Datenteil enthält. Beim Passieren angeschlossener peripherer Funktionseinheiten wird die Adresseninformation in einer Auswerteschaltung dekrementiert und die Dateninformation unverändert übertragen. Bei Adressenerkennung, das heißt, wenn die Adresseninformation auf Null bzw. einen festgelegten Wert dekrementiert empfangen wurde, wird die Dateninformation an die periphere Funktionseinheit aus-bzw. von dieser eingegeben und durch die nachfolgenden peripheren Funktionseinheiten auf der Ringleitung zur Zentrale unverändert weitergegeben. Ein wesentlicher Nachteil dieses Verfahrens besteht ebenfalls darin, daß ein Ausfall der Auswerteschaltung einer peripheren Funktionseinheit das Restsystem nicht voll funktionsfähig beläßt, und daß die Änderung der Teilnehmer im Übertragungssystem immer mit einer Adressenänderung verbunden ist, also nicht wahlfrei gestaltbar ist.

Hier will die Erfindung Abhilfe schaffen. Aufgabe der Erfindung ist es deshalb, ein Verfahren und eine Schaltungsanordnung zur Informationsübertragung zwischen einer zentralen Steuereinrichtung und peripheren Funktionseinheiten, die sowohl binäre Geber-als auch Stelleinrichtungen sein können, anzugeben, wobei die Informationsübertragung von der zentralen Steuereinrichtung durch die Aussendung eines aus einem Adreß-und einem Datenteil bestehenden Datenwortes ausgelöst wird, die bei Anwendung in linien-und ringförmi gen Übertragungssystemen, insbesondere sog. 'Open-loop'-und 'Closed-loop'-Systemen, eine hohe Systemsicherheit in Bezug auf den Ausfall einzelner peripherer Funktionseinheiten garantieren, die Realisierung hoher Taktraten für die Erfassung und Ausgabe von Prozeßdaten gestatten, den wahlweisen Zugriff auf beliebige periphere Funktionseinheiten ermöglichen und Wechselwirkungen zwischen Adresse und Ort des Anschlusses der peripheren Funktionseinheiten am Übertragungskanal ausschließen.

Die Aufgabe wird anspruchsgemäß gelöst. Vorteilhafte Ausführungsformen sind Gegenstand der abhängigen Ansprüche.

Das erfindungsgemäße Verfahren zur Informationsübertragung zwischen einer zentralen Steuereinrichtung und peripheren Funktionseinheiten ist dadurch gekennzeichnet, daß

-die zentrale Steuereinrichtung die parallelen Datenworte für einzugebende Stellgrößen $Y_i$ bzw. abzufragende Prozeßgrößen $X_i$ an eine Ausgabesteuerung liefert,

-die Ausgabesteuerung die parallelen Datenworte einer Einrichtung zur Parallel-Seriell-Wandlung zuführt,

-in der Einrichtung zur Parallel-Seriell-Wandlung die parallelen Datenworte ungetaktet in serielle Datenworte umgewandelt werden,

-den seriellen Datenworten am Anfang ein Startbit und am Ende ein Stoppbit angefügt wird,

-jedes serielle Datenwort auf einem ersten Übertragungskanal an die peripheren Funktionseinheiten gesendet wird,

-jedes serielle Datenwort in jeder peripheren Funktionseinheit sowohl regeneriert zur nachfolgenden peripheren Funktionseinheit weitergeleitet als auch zur Analyse ausgekoppelt wird,

-eine Adressendecodierung und Datenzuordnung des zur Analyse ausgegebenen seriellen Datenwortes vorgenommen wird,

-mit der Adressenerkennung des ausgekoppelten seriellen Datenwortes die Übernahme der Stellgröße $Y_i$ oder die Abfrage der Prozeßgröße $X_i$ entsprechend der Betriebsart der peripheren Funktionseinheit erfolgt, und

-ein Auswertesignal durch die periphere Funktionseinheit erzeugt und auf einem zweiten Übertragungskanal an die zentrale Steuereinrichtung gesendet wird.

Erfolgt bei diesem Verfahren die Adressenerkennung, so wird gleichzeitig auch die Betriebsart festgestellt. Das bedeutet, daß festgestellt wird, ob an die periphere Funktionseinheit, also an die binäre Geber- bzw. Stelleinrichtung, eine Stellgröße $Y_i$ ausgegeben wird, oder ob von dieser eine Prozeßgröße $X_i$ abgefragt wird. Wird bei der Druckführung des erfindungsgemäßen Verfahrens eine Stellgröße $Y_i$ zur aufgabengemäßen Verarbeitung ausgegeben, so wird diese in weiterer Ausgestaltung des erfindungsgemäßen Verfahrens gleichzeitig zur Erzeugung eines Antwortsignales übergeben, das auf dem zweiten Übertragungskanal zur Kontrolle an die zentrale Steuereinrichtung gesendet wird. Damit ist eine Kontrolle des bestimmungsgemäßen Empfanges der entsprechenden Information in der angesprochenen peripheren Funktionseinheit gewährleistet.

Wird dagegen von der peripheren Funktionseinheit, also von der binären Geber-bzw. Stelleinrichtung, eine Prozeßgröße $X_i$ abgefragt, so wird diese in weiterer Durchführung des erfindungsgemäßen Verfahrens mit der Adressenerkennung zur Erzeugung eines Antwortsignales übergeben, das auf dem zweiten Übertragungskanal an die zentrale Steuereinrichtung gesendet wird.

Bei der Durchführung des erfindungsgemäßen Verfahrens ist zwischen der Aussendung von zwei aufeinanderfolgenden Datenwörtern durch die zentrale Steuereinrichtung bis zum Eintreffen des Antwortsignales eine Pause einzuhalten, die mindestens die Länge eines Datenwortes betragen sollte.

Die erfindungsgemäße Schaltungsanordnung zur Durchführung dieses Verfahrens ist dadurch gekennzeichnet, daß

-die zentrale Steuereinrichtung mit einer Ausgabesteuerung verbunden ist, an die sich eine das parallele Datenwort ungetaktet mittels Laufzeitverzögerung und Logikgattern in ein serielles Datenwort umwandelnde Einrichtung zur Parallel-Seriell-Wandlung und nachfolgend eine Treiberstufe zur Leitungsanpassung anschließt,

-jede sowohl als binäre Geber-als auch als Stelleinrichtung dienende periphere Funktionseinheit am Eingang eine Treiberstufe besitzt, die zur Adressendecodierung und Datenzuordnung mit einer Einrichtung zur ungetakteten Seriell-Parallel-Wandlung und nachfolgend mit einer Einrichtung zur Adressendecodierung und Datenzuordnung sowie mit einer die Stellgröße $Y_i$ übernehmenden Speicherschaltung verbunden ist,

-die Speicherschaltung zur Ausgabe der Stellgröße $Y_i$ sowohl mit einer Stelleinrichtung zur aufgabegemäßen Verarbeitung als auch mit einer Einrichtung zur Antwortsignalerzeugung in Verbindung steht, an die sich eine Antwortsignalsteuerung, die mit der Adressendecodierung und Datenzuordnung geschaltet ist, und eine am Ausgang jeder peripheren Funktionseinheit vorgesehene Treiberstufe anschließt, und

-jede am Ausgang der peripheren Funktionseinheiten vorgesehene Treiberstufe über einen zweiten übertragungskanal und eine Speicherschaltung mit der zentralen Steuereinrichtung in Verbindung steht, während die am Eingang jeder peripheren Funktionseinheit befindlichen Treiberstufen über einen ersten Übertragungskanal mit der der zentralen Steuereinrichtung zugerichteten Treiberstufe verbunden sind.

Bei dieser erfindungsgemäßen Schaltungsanordnung liegt die abzufragende Prozeßgröße $X_i$ ebenfalls an der Einrichtung zur Antwortsignalerzeugung an.

Damit nun bei der Adressendecodierung und Datenzuordnung auf einen separaten Taktkanal bzw. auf einen Frequenzteiler verzichtet werden kann, sind in weiterer Ausgestaltung der erfindungsgemäßen Schaltungsanordnung die Einrichtungen zur Seriell-Parallel-Wandlung dadurch gekennzeichnet, daß

-sie aus einer Laufzeitverzögerungsschaltung und aus einem UND-Gatter bestehen,

-die Ausgänge der Laufzeitverzögerungsschaltung, die dem Startbit, den Adressenbits und dem Stoppbit des seriellen Datenwortes entsprechen, auf die Eingänge des UND-Gatters geschaltet sind,

-die Eingänge des UND-Gatters so als invertierende bzw. nichtinvertierende Eingänge ausgelegt sind, daß beim Anliegen der zu erkennenden Adresse am Ausgang des UND-Gatters H-Potential erscheint,

-der Ausgang des UND-Gatters auf den Takteingang einer Speicherschaltung geschaltet ist und

-die Ausgänge der Laufzeitverzögerungsschaltung, die den Datenbits des seriellen Datenwortes entsprechen, auf die Dateneingänge der Speicherschaltung gelegt sind.

Dabei ist die Funktionsweise der Einrichtungen zur Seriell-Parallel-Wandlung folgende:

Das serielle Datenwort wird in die Laufzeitverzögerungsschaltung, deren Ausgänge um die Zeitdauer eines Bits gestuft sind, eingespeist. Das Start-und das Stoppbit des Datenwortes führen H-Potential. Wenn das gesamte Datenwort eingespeist ist, liegen an den Ausgängen der Laufzeitverzögerungsschaltung und damit an den Eingängen des UND-Gatters sowie an den Eingängen der Speicherschaltung die entsprechenden Potentiale an. Damit liegen am UND-Gatter das Start-und das Stoppbit mit H-Potential und an den Eingängen für die Adreßbits diese ent sprechend ihrer Adresse mit H-Potential oder L-Potential an. Die Adreßeingänge des UND-Gatters sind entsprechend der zu erkennenden Adresse als invertierende oder nichtinvertierende Eingänge ausgelegt. Ist die Adresse des Datenwortes entsprechend der Auslegung der Eingänge des UND-Gatters, schaltet das UND-Gatter am Ausgang auf H-Potential. Damit wird die Speicherschaltung aktiviert, und die an den Dateneingängen anliegenden Datenbits werden von der Speicherschaltung übernommen, wo sie zur aufgabengemäßen Weiterverarbeitung in der Datensenke zur Verfügung stehen.

Um gegenüber Anordnungen mit Schieberegistern eine Parallel-Seriell-Wandlung mit geringer Verlustleistung bei gleicher Bitrate zu gestatten, wobei gleichzeitig auf einen Taktgenerator verzichtet werden kann und eine hohe Stabilität der Bitrate gewährleistet wird, besteht die Einrichtung zur Parallel-Seriell-Wandlung aus einer Laufzeitverzögerungsschaltung, einem Impulsgenerator, aus jeweils ein Bit des parallelen Datenwortes mit dem Signal am zugeordneten Ausgang der Laufzeitverzögerungsschaltung NAND-verknüpfenden NAND-Gattern und aus einem Weiteren, die Ausgänge der vorangestellten NAND-Gatter NAND-verknüpfenden NAND-Gatter, wobei die Ausgänge der Laufzeitverzögerungsschaltung um die Zeitdauer eines Bits gestuft sind.

Die Einrichtung zur Parallel-Seriell-Wandlung kann aber auch so aufgebaut sein, daß sie neben der Laufzeitverzögerungsschaltung und dem Impulsgenerator aus jeweils ein Bit des parallelen Datenwortes mit dem Signal am zugeordneten Ausgang der Laufzeitverzögerungsschaltung UND-verknüpfenden UND-Gattern und aus einem weiteren, die Ausgänge der vorangestellten UND-Gatter ODER-verknüpfenden ODER-Gatter bebesteht, wobei die Ausgänge der Laufzeitverzögerungsschaltung ebenfalls wieder um die Zeitdauer eines Bits gestuft sind.

Im folgenden wird die Erfindung anhand von Zeichnungen, die ein Ausführungsbeispiel darstellen, näher erläutert.

Es zeigen:

Figur 1 ein Blockschaltbild der erfindungsgemäßen Schaltungsanordnung,

Figur 2 den zeitlichen Ablauf einer Folge serieller Datenworte sowie den Aufbau eines Datenwortes,

Figur 3 eine Schaltungsanordnung der Einrichtung zur Seriell-Parallel-Wandlung der Schaltungsanordnung nach Figur 1,

Figur 4 eine Schaltungsanordnung der Einrichtung zur Parallel-Seriell-Wandlung der Schaltungsanordnung nach Figur 1 und

Figur 5 eine gegenüber Figur 4 abgewandelte Schaltungsanordnung der Einrichtung zur Parallel-Seriell-Wandlung.

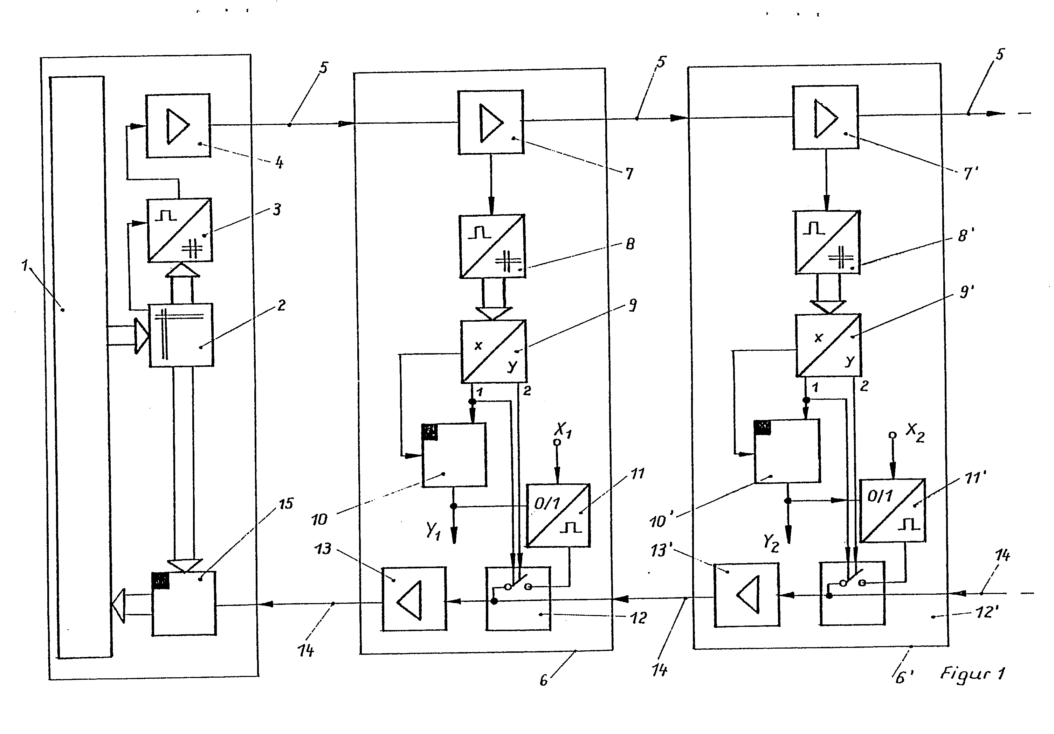

Bei der in Figur 1 dargestellten Schaltungsanordnung liefert die zentrale Steuereinrichtung 1 die parallelen Adressen-und Dateninformationen für einzugebende Stellgröäen $Y_i$ bzw. abzufragende Geberwerte $X_i$ an eine Ausgabesteuerung 2. Von der Ausgabesteuerung 2 werden die parallelen Informationen einer Einrichtung zur Parallel-Seriell-Wandlung 3 zugeführt. In dieser Einrichtung zur Parallel-Seriell-Wandlung 3 wird das parallele Datenwort ungetaktet mittels Laufzeitverzögerung und Logikgattern in ein serielles Datenwort umgewandelt. Gleichzeitig wird dem seriellen Datenwort am Anfang ein Start-und am Ende ein Stoppbit angefügt. Nach Leitungsanpassung mittels einer Treiberstufe 4 gelangt das serielle Datenwort über einen ersten Übertragungskanal 5 zur ersten peripheren Funktionseinheit 6. Diese sowie alle weiteren peripheren Funktionseinheiten 6; 6' usw. haben die Form kombinierter binärer Geber-und Stelleinrichtungen. In jeder peripheren Funktionseinheit 6; 6' usw. wird das serielle Datenwort mittels einer Treiberstufe 7; 7' regeneriert und auf dem ersten Übertragungskanal 5 zur nachfolgenden peripheren Funktionseinheit weitergeleitet. Gleichzeitig wird das serielle Datenwort zur Analyse in den peripheren Funktionseinheiten 6; 6' usw. ausgekoppelt. Dazu erfolgt zunächst die Adressende codierung und Datenzuordnung mittels einer Einrichtung zur ungetakteten Seriell-Parallel-Wandlung 8; 8', einer Einrichtung zur Adressendecodierung und Datenzuordnung 9; 9' und einer Speicherschaltung 10; 10'. Im Ergebnis erkennt jede periphere Funktionseinheit 6; 6' usw. einerseits, ob die im seriellen Datenwort enthaltene Information für sie bestimmt ist oder nicht. Bei Erkennung der Adresse wird gleichzeitig die Betriebsart festgestellt. Das heißt, es wird festgestellt, ausgehend von einer peripheren Funktionseinheit, ob an sie eine Stellgröße $Y_i$ ausgegeben wird, oder ob von ihr eine Prozeßgröße $X_i$ abgefragt wird. Im ersten Fall wird die im Ergebnis der Adressendecodierung und Datenzuordnung von der Speicherschaltung 10 übernommene Stellgröße $Y_i$ an eine entsprechende Stelleinrichtun zur aufgabengemäßen Verarbeitung ausgegeben. Gleichzeitig wird die Stellgröße $Y_i$ an eine Einrichtung zur Antwortsignalerzeugung 11 übergeben. Das Antwortsignal wird über eine Antwortsignalsteuerung 12, die mit der Einrichtung zur Adressendecodierung und Datenzuord-

4

nung 9 entsprechend geschaltet ist, und eine Treiberstufe 13 auf einem zweiten Übertragungskanal 14 über die Speicherschaltung 15 an die zentrale Steuereinrichtung 1 gesendet. Damit ist eine Kontrolle des bestimmungsgemäßen Empfangs der entsprechenden Information in einer angesprochenen peripheren Funktionseinheit 6; 6' usw. gewährleistet.

Im Fall der Abfrage einer Prozeßgröße $X_i$ wird ebenfalls mit der Einrichtung zur Adressendecodierung und Datenzuordnung 9 die Antwortsignalsteuerung 12 geschaltet und die an der Einrichtung zur Antwortsignalerzeugung 11 anliegende Prozeßgröße $X_i$ analog dem ersten Fall an die zentrale Steuereinrichtung 1 als Antwort gesendet. Nach Eintreffen der Antwort in der zentralen Steuereinrichtung 1, frühestens jedoch nach einer Pause, die mindestens der Länge eines ausgesendeten Datenwortes, die stets konstant ist, entspricht, kann das nächste Datenwort durch die zentrale Steuereinrichtung 1 über den ersten Übertragungskanal 5 ausgesendet werden.

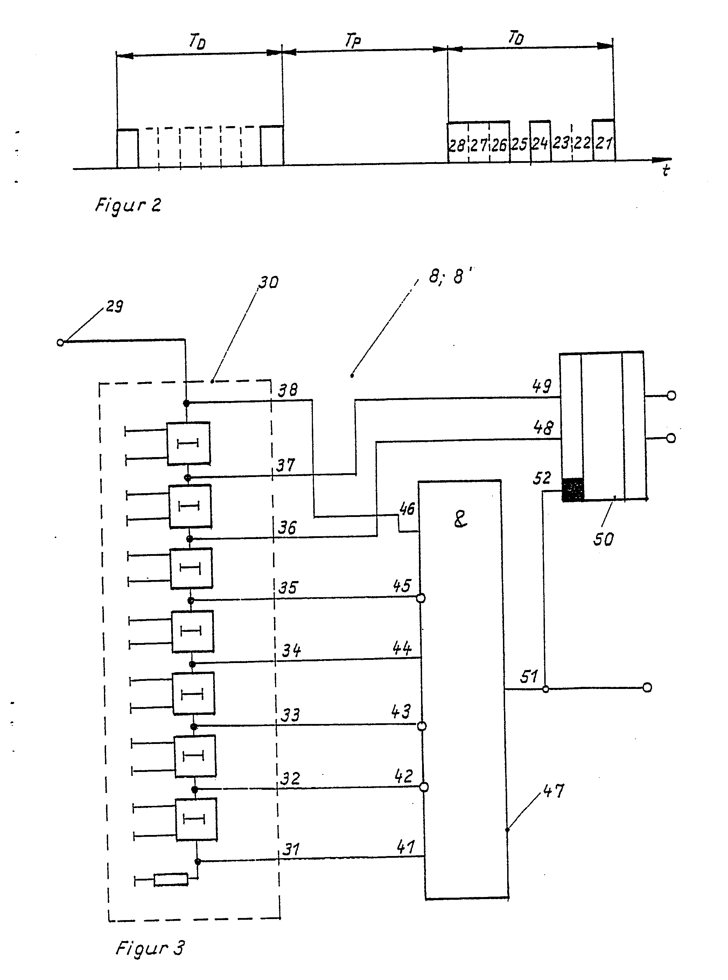

Wie Figur 2 zeigt, ist das serielle Datenwort so aufgebaut, daß es aus einem Startbit 21, vier Adreßbits 22; 23; 24; 25, zwei Datenbits 26; 27 und aus einem Stoppbit 28 besteht. Dieses mit einer Datenwortlänge $T_D$ von acht bit bestehende serielle Datenwort - bis zur Aussendung des nächsten seriellen Datenwortes wird immer eine Pause $T_p$ eingehalten, die der Länge eines Datenwortes entspricht - liegt am Eingang 29 der Laufzeitverzögerungsschaltung 30 der in Figur 30 dargestellten Einrichtung zur Seriell-Parallel-Wandlung 8; 8' an. Entsprechend der Datenworlänge $T_D$ eines Systems mit Acht-Bit-Datenwörtern weist die Laufzeitverzögerungsschaltung 30 acht Ausgänge 31 ... 38 auf, die jeweils um die Zeitdauer eines Bits gestuft sind. Dabei sind die Ausgänge 31 ... 38 entsprechend dem Datenwortaufbau so zugeordnet, daß der Ausgang 31 dem Startbit 21, die Ausgänge 32 ... 35 den Adressenbits 22 ... 25, zwei Ausgänge 36; 37 den Datenbits 26; 27 und ein Ausgang 38 dem Stoppbit 28 entspricht. Die Ausgänge 31 ... 35 und 38 der Laufzeitverzögerungsschaltung 30, die dem Startbit 21, dem Stoppbit 28 und den Adressenbits 22 ... 25 zugeordnet sind, werden auf die Eingänge 41 ... 46 eines UND-Gatters 47 geschaltet. Die Ausgänge 36; 37 der Laufzeitverzögerungsschaltung 30, die den Datenbist 26; 27 zugeordnet sind, werden auf die Dateneingänge 48; 49 einer Speicherschaltung 50 geschaltet. Der Ausgang 51 des UND-Gatters 47 ist mit dem Takteingang 52 der Speicherschaltung 50 verbunden.

Die Funktion dieser Schaltungsanordnung ist folgende:

Das Datenwort entsprechend dem in Figur 2 dargestellten Beispiel wird in die Laufzeitverzögerungsschaltung ·30 eingespeist. Nachdem das gesamte Datenwort eingespeist ist, liegen an den Ausgängen 31 ... 38 der Laufzeitverzögerungsschaltung 30 folgende Potentiale an:

Ausgang 31: H-Potential
Ausgang 32: L-Potential
Ausgang 33: L-Potential
Ausgang 34: H-Potential
Ausgang 35: L-Potential
Ausgang 36: H-Potential
Ausgang 37: H-Potential
Ausgang 38: H-Potential

Damit liegen an den Eingängen 41 ... 46 des UND-Gatters 47 die Potentiale wie folgt an:

```
Eingang 41: H-Potential    (Startbit)
Eingang 46: H-Potential    (Stoppbit)
Eingang 42: L-Potential ⎫
Eingang 43: L-Potential ⎬
Eingang 44: H-Potential ⎪ (Adreßbits)
Eingang 45: L-Potential ⎭
```

Die Eingänge 41 ... 46 des UND-Gatters 47 sind entsprechend der zu erkennenden Adresse ausgelegt. Demzufolge sind im Beispiel drei Eingänge 42; 43; 45 als invertierende und einer als nichtinvertierender Eingang 44 gestaltet. In dem Moment, wo an den Eingängen 41 ... 46 des UND-Gatters 47 die entsprechenden Potentiale anliegen, das heißt, an allen nichtinvertierenden Eingängen 41; 44; 46 H-Potential und an allen invertierenden Eingängen 42; 43; 45 L-Potential, schaltet das UND-Gatter 47 an seinem Ausgang 51 auf H-Potential. Damit wird der Takteingang 52 der Speicherschaltung 50 gesetzt und die an den Dateneingängen 48; 49 anliegenden Informationen werden in die Speicherschaltung 50 übernommen, wo sie zur entsprechenden aufgabengemäßen Weiterverarbeitung zur Verfügung stehen.

5

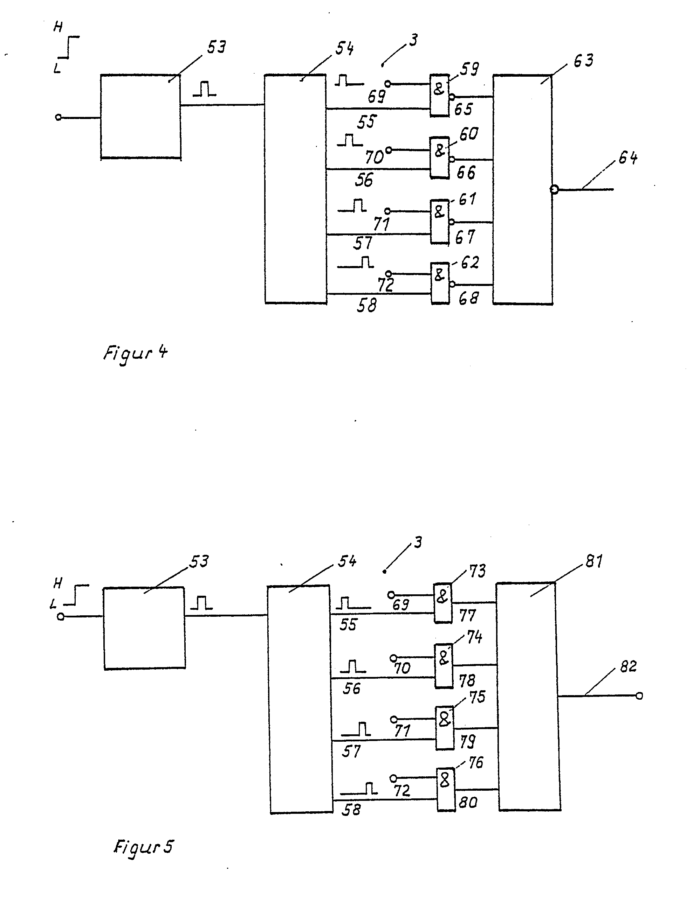

In der in Figur 4 gezeigten Schaltungsanordnung der Einrichtung zur Parallel-Seriell-Wandlung 3 der Schaltungsanordnung nach Figur 1 wird von einem Vier-Bit-Datenwort ausgegangen. Gemäß dieser Schaltungsanordnung ist ein Impulsgenerator 53 vorgesehen, der als Antwort auf ein Freigabesignal einen Impuls mit der geforderten Zeitdauer eines Bits abgibt, der in die Laufzeitverzögerungsschaltung 54 eingespeist wird. Unter Berücksichtigung des Vier-Bit-Datenwortes besitzt die Laufzeitverzögerungsschaltung 54 vier Ausgänge 55 ... 58. Es schließt sich die Anordnung zur Bewertung des Signals an den Ausgängen 55 ... 58 der Laufzeitverzögerungsschaltung 54 in Abhängigkeit vom angelegten parallelen Datenwort an. Die Bewertung geschieht durch NAND-Verknüpfung jeweils eines Bits des angelegten parallelen Datenwortes mit den zugeordneten Ausgängen 55 ... 58 der Laufzeitverzögerungsschaltung 54 mittels der NAND-Gatter 59 ... 62. Die Ausgangssignale der NAND-Gatter 59 ... 62 werden durch ein weiteres NAND-Gatter 63 zusammengefaßt, dessen Ausgang 64 den Ausgang der Einrichtung zur Parallel-Seriell-Wandlung 3 darstellt.

Der zeitliche Ablauf gestaltet sich wie folgt:

Zunächst liegt ein Ausgangszustand vor. Das Freigabesignal hat L-Potential. Der Ausgang des Impulsgenerators 53 und die Ausgänge 55 ... 58 der Laufzeitverzögerungsschaltung 54 führen ebenfalls L-Potential, wodurch die Ausgänge 65 ... 68 der NAND-Gatter 59 ... 62 H-Potential annehmen, so daß das NAND-Gatter 63 L-Potential annimmt, das auch der Ausgang 64 der Einrichtung zur Parallel-Seriell-Wandlung 3 führt. An die Eingänge 69 ... 72 der NAND-Gatter 59 ... 62 kann das parallele Datenwort angelegt werden, wodurch der Ausgangszustand nicht verändert wird. Nachdem das parallele Datenwort statisch an den Eingängen 69 ... 72 der NAND-Gatter 59 ... 62 anliegt, kann die Einrichtung zur Parallel-Seriell-Wandlung 3 freigegeben werden, wozu von außen das Potential des Freigabesignals von L auf H zu ändern ist, wodurch der Impulsgenerator 53 einen Impuls von der Zeitdauer eines Bits abgibt, der in die Laufzeitverzögerungsschaltung 54 eingespeist wird, die derart gestaltet ist, daß der Impuls entkoppelt an den Ausgängen 55 ... 58 der Laufzeitverzögerungs schaltung 54 mit H-Potential erscheint. Die sich anschließende Schaltungsanordnung der NAND-Gatter 59 ... 63 realisiert die Funktion

$$ J = D_1 \wedge V_1 \wedge D_2 \wedge V_2 \wedge D_3 \wedge V_3 \wedge D_4 \wedge V_4, $$

wobei $D_1$ ... $D_4$ die Eingänge 69 ... 72 der NAND-Gatter 59 ... 62 und $V_1$ ... $V_4$ die Ausgänge 55 ... 58 der Laufzeitverzögerungsschaltung 54 sind, so daß die Datenelemente des angelegten parallelen Datenwortes auf den jeweiligen Ausgang 65 ... 68 der NAND-Gatter 59 ... 62 durchgeschaltet werden und am Ausgang 64 des NAND-Gatters 63, entsprechend dem auszugebenen Datenwort, eine serielle Folge von H-Impulsen erscheint.

Liegt beispielsweise am ersten Eingang 69 des Datenwortes H-Potential (Log 1) an - entspricht dem ersten Datenelement des Datenwortes -, so schaltet das NAND-Gatter 59 für die Zeitdauer eines Bits am Ausgang 65 auf L um, wenn der H-Impuls am zugeordneten Ausgang 55 der Laufzeitverzögerungsschaltung 54 erscheint, wodurch die anschließende NAND-Verknüpfung durch das NAND-Gatter 63 H-Potential an den Ausgang 64 liefert. Entspricht dagegen dem ersten Datenelement des Datenwortes L-Potential (Log.0), so bleibt das NAND-Gatter 59 am Ausgang 65 auf H-Potential geschaltet, auch wenn der H-Impuls am zugeordneten Ausgang 55 der Laufzeitverzögerungsschaltung 54 erscheint, wodurch die anschließende NAND-Verknüpfung L-Potential am Ausgang 64 liefert.

Die übrigen Datenelemente des angelegten parallelen Datenwortes werden in analoger Weise auf den Ausgang 64 durchgeschaltet. Erst nachdem das letzte Datenelement des angelegten parallelen Datenwortes am Ausgang 64 erscheint, kann das parallele Datenwort an den Eingängen 69 ... 72 geändert werden. Der zeitliche Ablauf ist dann beendet und es liegt wieder ein Ausgangszustand vor.

Die Bit-Rate des seriellen Datenwortes wird damit ausschließlich von dem Aufbau der Laufzeitverzögerungsschaltung 54 vorgegeben, die derart gestaltet ist, daß die Signallaufzeit vom Eingang der Laufzeitverzögerungsschaltung 54 bis zu den einzelnen Ausgängen 55 ... 58 um je eine Bit-Zeit gestuft ist. Damit ist die Bit-Rate stabil gegenüber äußeren Einflüssen, wie Temperaturschwankungen, Betriebsspannungsschwankungen etc. Der von Impulsgenerator 53 erzeugte Impuls muß in seiner Impulsdauer an die Zeitdauer eines Bits angepaßt sein.

Die in Figur 5 dargestellte Schaltungsanordnung für die Einrichtung zur Parallel-Seriell-Wandlung 3 unterscheidet sich von der Schaltungsanordnung nach Figur 4 dadurch, daß ebenfalls wieder unter Berücksichtigung eines Vier-Bit-Datenwortes die Bewertung des angelegten parallelen Datenwortes nunmehr durch UND-Verknüpfung jeweils eines Bits des angelegten parallelen Datenwortes mit dem zugeordneten Ausgang 55 ... 58 der Laufzeitverzögerungsschaltung 54 mittels der UND-Gatter 73 ... 76 erfolgt.

Dabei werden die Signale der Ausgänge 77 ... 80 der UND-Gatter 73 ... 76 durch ein weiteres ODER-verknüpfendes ODER-Gatter 81 zusammengefaßt. Am Ausgang 82 des ODER-Gatters 81 erscheint dann eine der Schaltungsanordnung nach Figur 4 entsprechende serielle Impulsfolge.

**Ansprüche**

1. Verfahren zur Informationsübertragung zwischen einer zentralen Steuereinrichtung und peripheren Funktionseinheiten, die kombinierte binäre Geber-und Stelleinrichtungen sein können, wobei die Informationsübertragung von der zentralen Steuereinrichtung durch die Aussendung eines Datenwortes, bestehend aus einem Adreß-und einem Datenteil, ausgelöst wird,
dadurch gekennzeichnet,
daß
-die zentrale Steuereinrichtung die parallelen Datenworte für einzugebende Stellgrößen $Y_i$ bzw. abzufragende Prozeßgrößen $X_i$ an eine Ausgabesteuerung liefert,
-die Ausgabesteuerung die parallelen Datenworte einer Einrichtung zur Parallel-Seriell-Wandlung zuführt,
-in der Einrichtung zur Parallel-Seriell-Wandlung die parallelen Datenworte ungetaktet in serielle Datenworte umgewandelt werden,
-den seriellen Datenworten am Anfang ein Startbit und am Ende ein Stoppbit angefügt wird,
-jedes serielle Datenwort auf einem ersten Übertragungskanal an die peripheren Funktionseinheiten gesendet wird,
-jedes serielle Datenwort in jeder peripheren Funktionseinheit sowohl regeneriert zur nachfolgenden peripheren Funktionseinheit weitergeleitet als auch zur Analyse ausgekoppelt wird,
-eine Adressendecodierung und Datenzuordnung des zur Analyse ausgekoppelten seriellen Datenwortes erfolgt,
-mit der Adressenerkennung des ausgekoppelten seriellen Datenwortes die Übernahme der Stellgröße $Y_i$ oder die Abfrage der Prozeßgröße $X_i$ entsprechend der Betriebsart der peripheren Funktionseinheit erfolgt und
-ein Auswertesignal durch die periphere Funktionseinheit erzeugt und auf einem zweiten Übertragungskanal an die zentrale Steuereinrichtung gesendet wird.

2. Verfahren nach Anspruch 1, dadurch gekennzeichnet, daß
-bei Übernahme der Stellgröße $Y_i$ diese zur aufgabengemäßen Verarbeitung ausgegeben wird,
-die Stellgröße $Y_i$ gleichzeitig zur Erzeugung eines Antwortsignales übergeben wird und
-das Antwortsignal auf dem zweiten Übertragungskanal zur Kontrolle an die zentrale Steuereinrichtung gesendet wird.

3. Verfahren nach Anspruch 1 oder 2, dadurch gekennzeichnet, daß
-bei Abfrage einer Prozeßgröße $X_i$ diese mit der Adressenerkennung zur Erzeugung eines Antwortsignales übergeben wird und
-das Antwortsignal auf dem zweiten Übertragungskanal an die zentrale Steuereinrichtung gesendet wird.

4. Verfahren nach einem der Anaprüche 1 bis 3, dadurch gekennzeichnet, daß zwischen der Aussendung von zwei aufeinanderfolgenden Datenwörtern durch die zentrale Steuereinrichtung eine Pause bis zum Eintreffen des Antwortsignales eingehalten wird.

5. Verfahren nach Patentanspruch 4, dadurch gekennzeichnet, daß eine Pause von mindestens der Länge eines Datenwortes eingehalten wird.

6. Schaltungsanordnung zur Durchführung des Verfahrens nach einem der Ansprüche 1 bis 5, die aus einer zentralen Steuer einrichtung (1) und aus peripheren Funktionseinheiten (6), die sowohl als binäre Geber-als auch als Stelleinrichtung arbeiten können, besteht, dadurch gekennzeichnet, daß
-die zentrale Steuereinrichtung (1). mit einer Ausgabesteuerung (2) verbunden ist, an die sich eine das parallele Datenwort ungetaktet mittels Laufzeitverzögerung und Logikgattern in ein serielles Datenwort umwandelnde Einrichtung zur Parallel-Seriell-Wandlung (3) und nachfolgend eine Treiberstufe (4) zur Leitungsanpassung anschließt,
-jede sowohl als Geber-als auch als Stelleinrichtung dienende periphere Funktionseinheit (6; 6') am Eingang eine Treiberstufe (7; 7') besitzt, die zur Adressendecodierung und Datenzuordnung mit einer Einrichtung zur ungetakteten Seriell-Parallel-Wandlung (8; 8') und nachfolgend mit einer Einrichtung zur Adressendecodierung und Datenzuordnung (9; 9') sowie mit einer die Stellgröße $Y_i$ übernehmenden Speicherschaltung (10; 10') verbunden ist,

-die Speicherschaltung (10; 10') zur Ausgabe der Stellgröße Y$_i$ sowohl mit einer Stelleinrichtung zur aufgabengemäßen Verarbeitung als auch mit einer Einrichtung zur Antwortsignalerzeugung (11; 11') in Verbindung steht, an die sich eine Antwortsignalsteuerung (12; 12'), die mit der Adressendecodierung und Datenzuordnung (9; 9') geschaltet ist, und eine am Ausgang jeder peripheren Funktionseinheit (6; 6') vorgesehene Treiberstufe (13; 13') anschließt

und

-jede am Ausgang der peripheren Funktionseinheiten (6; 6') vorgesehene Treiberstufe (13; 13') über einen zweiten Übertragungskanal (14) und eine Speicherschaltung (15) mit der zentralen Steuereinrichtung (1) in Verbindung steht, während die am Eingang jeder peripheren Funktionseinheit (6; 6') befindlichen Treiberstufen (7; 7') über einen ersten Übertragungskanal (5) mit der der zentralen Steuereinrichtung (1) zugeordneten Treiberstufe (4) verbunden sind.

7. Schaltungsanordnung nach Anspruch 6, dadurch gekennzeichnet, daß

die abzufragende Prozeßgröße X$_i$ ebenfalls an der Einrichtung zur Antwortsignalerzeugung (11; 11') anliegt.

8. Schaltungsanordnung nach Anspruch 6 oder 7, dadurch gekennzeichnet, daß

-die Einrichtungen zur Seriell-Parallel-Wandlung (8; 8') aus einer Laufzeitverzögerungsschaltung (30) und aus einem UND-Gatter (47) bestehen,

-die Ausgänge (31 ... 35 und 38) der Laufzeitverzögerungsschaltung (30), die dem Startbit (21), den Adressenbits (22 ... 25) und dem Stoppbit (28) des seriellen Datenwortes entsprechen, auf die Eingänge (41 ... 46) des UND-Gatters (47) geschaltet sind,

-die Eingänge (41 ... 46) des UND-Gatters (47) so als invertierende bzw. nichtinvertierende Eingänge ausgelegt sind, daß beim Anliegen der zu erkennenden Adresse am Ausgang (51) des UND-Gatters (47) H-Potential erscheint,

-der Ausgang (51) des UND-Gatters (47) auf den Takteingang (52) einer Speicherschaltung (50) geschaltet ist

und

-die Ausgänge (36; 37) der Laufzeitverzögerungsschaltung (30), die den Datenbits (26; 27) des seriellen Datenwortes entsprechen, auf die Dateneingänge (48; 49) der Speicherschaltung (50) gelegt sind.

9. Schaltungsanordnung nach einem der Ansprüche 6 bis 8, dadurch gekennzeichnet, daß

-die Einrichtung zur Parallel-Seriell-Wandlung (3) besteht aus einer Laufzeitverzögerungsschaltung (54), einem Impulsgenerator (53), jeweils ein Bit des parallelen Datenwortes mit dem Signal am zugeordneten Ausgang (55 ... 58) der Laufzeitverzögerungsschaltung (54) NAND-verknüpfenden NAND-Gatter (59 ... 62) und einem weiteren, die Ausgänge (65 ... 68) der vorangestellten NAND-Gatter (59 ... 62) NAND-verknüpfenden NAND-Gatter (63),

und

-die Ausgänge (55 ... 58) der Laufzeitverzögerungsschaltung (54) um die Zeitdauer eines Bits gestuft sind.

10. Schaltungsanordnung nach einem der Ansprüche 6 bis 8, dadurch gekennzeichnet, daß

-die Einrichtung zur Parallel-Seriell-Wandlung (3) besteht aus einer Laufzeitverzögerungsschaltung (54), einem Impulsgenerator (53), jeweils ein Bit des parallelen Datenwortes mit dem Signal am zugeordneten Ausgang (55 ... 58) der Laufzeitverzögerungsschaltung (54) UND-verknüpfenden UND-Gattern (73 ... 76) und einem weiteren, die Ausgänge (77 ... 80) der vorangestellten UND-Gatter (73 ... 76) ODER-verknüpfenden ODER-Gatter (81),

und

-die Ausgänge (55 ... 58) der Laufzeitverzögerungsschaltung (54) um die Zeitdauer eines Bits gestuft sind.

Figur 1

0 267 468

0 267 468

Figur 2

Figur 3

Figur 4

Figur 5